# EUROPÄISCHE PATENTSCHRIFT

(11) **EP 1 004 768 B1**
(45) Veröffentlichungstag und Bekanntmachung des Hinweises auf die Patenterteilung: **12.05.2004**
(21) Anmeldenummer: 99122012.0
(22) Anmeldetag: 11.11.1999
(51) Int. Cl.: F02N 11/08, B60H 1/04

(54) **Heizungsanlage für den Innenraum eines Fahrzeuges**
Heating device for the interior of a vehicle
Dispositif de chauffage pour l'intérieur d'un véhicule

(30) Priorität: 24.11.1998 DE 19854119; 28.07.1999 DE 19935236
(43) Veröffentlichungstag der Anmeldung: 31.05.2000
(73) Patentinhaber: Volkswagen Aktiengesellschaft, 38436 Wolfsburg (DE)
(72) Erfinder: Heddram, Marco, 38536 Meinersen (DE)

(56) Entgegenhaltungen:
- DE-A- 3 215 642
- US-A- 4 883 226
- US-A- 5 317 998

## Beschreibung

Die Erfindung betrifft eine Heizungsanlage für den Innenraum eines Fahrzeuges mit den im Oberbegriff des Anspruchs 1 genannten Merkmalen.

Heizungsanlagen der gattungsgemäßen Art sind bekannt. Hierbei ist eine flüssigkeitsgekühlte Brennkraftmaschine in einen Kühlkreislauf eingebunden, innerhalb dem ein Kühlmittel, in der Regel Wasser, zirkuliert. Das Kühlmittel wird über eine von der Brennkraftmaschine antreibbare mechanische Fördereinrichtung umgewälzt und über einen Kühler geführt, so daß eine Kühlung der Brennkraftmaschine erfolgen kann. Es ist bekannt, zur Heizung des Innenraumes des Fahrzeuges von dem Kühlkreislauf einen Heizkreislauf abzuzweigen, der über eine Heizeinrichtung, insbesondere einen Wärmetauscher, geführt wird. Mittels des Wärmetauschers kann eine Heizluft erwärmt werden, die durch eine Strömungsmaschine über ein Kanalsystem in den Fahrzeuginnenraum führbar ist. Entsprechend einer Heizleistungsanforderung durch einen Fahrzeugführer oder eine automatische Temperaturregelung erfolgt eine unterschiedlich starke Erwärmung des Luftstromes durch den Wärmetauscher.

Es ist femer bekannt, Fahrzeuge in einem sogenannten Start/Stop-Modus zu betreiben, bei dem die Brennkraftmaschine bei einem verkehrsbedingten Halten, beispielsweise einem Ampelstop oder dergleichen, automatisch abgeschaltet wird und nach einer Lastanforderung durch den Fahrzeugführer automatisch wieder startet. Da die mechanische Fördereinrichtung zum Umwälzen des Kühlkreislaufes bei abgeschalteter Brennkraftmaschine ebenfalls steht, ist hierbei nachteilig, daß mit dem Kühlkreislauf auch der mit dem Kühlkreislauf gekoppelte Heizkreislauf nicht mehr umgewälzt wird. Somit wird die Heizeinrichtung nicht vom erwärmten Kühlmittel durchströmt. Hierdurch ist bei Vorliegen einer Heizleistungsanforderung mit einem Absinken einer Ausblastemperatur des erwärmten Luftstromes in den Fahrzeuginnenraum zu rechnen. Insbesondere, wenn Außentemperaturen sich in einem relativ niederen Bereich, beispielsweise unterhalb des Gefrierpunktes, befinden, ist beim Stop der Brennkraftmaschine mit einem relativ raschen Abkühlen des Kühlmittels im Heizkreislauf zu rechnen, so daß es zu relativ großen Absenkungen der Ausblastemperatur der Heizluft kommen kann.

Es ist bereits vorgeschlagen, um dieses Problem zu beheben, die durch die Brennkraftmaschine mechanisch angetriebene Fördereinrichtung durch eine elektrisch betriebene Fördereinrichtung zu ersetzen beziehungsweise zu ergänzen, so daß auch bei abgeschalteter Brennkraftmaschine ein Kühlkreislauf für die Brennkraftmaschine und somit ein Heizkreislauf aufrechterhalten werden kann. Hierbei ist jedoch nachteilig, daß ein relativ großer Bauaufwand zu betreiben ist und ein zusätzlicher elektrischer Verbraucher in dem Fahrzeug anzuordnen ist.

Insbesondere ist nachteilig, daß eine elektrisch angetriebene Pumpe aufgrund ihres Strömungswiderstandes auch dann mitlaufen muß, wenn der Kühlkreislauf über eine mechanische Fördereinrichtung während des Betriebes der Brennkraftmaschine umgewälzt wird.

Aus der DE 32 15 642 A1 ist ein Start/Stop-System für Brennkraftmaschinen bekannt, bei dem die automatische Abschaltung der Brennkraftmaschine an verschiedene Fahrzeugparameter geknüpft ist. Treten einzelne dieser Fahrzeugparameter, beispielsweise das Über- beziehungsweise Unterschreiten einer Kühlmitteltemperatur, eingeschaltete Frontscheibenwerfer, Nebelscheinwerfer, Scheibenwischeranlage oder Klimaanlage, auf, wird die automatische Start/Stop-Funktion aufgehoben.

Der Erfindung liegt die Aufgabe zugrunde, eine Heizungsanlage der gattungsgemäßen Art zu schaffen, bei der in einfacher Weise ohne zusätzliche Bauelemente eine kontinuierliche Beheizung eines Innenraumes des Fahrzeuges möglich ist.

Erfindungsgemäß wird diese Aufgabe durch eine Heizungsanlage mit den im Anspruch 1 genannten Merkmalen gelöst. Dadurch, daß der automatische Start/Stop-Modus der Brennkraftmaschine in Abhängigkeit einer Heizleistungsanforderung für den Innenraum des Fahrzeuges abschaltbar ist, ist vorteilhaft möglich, eine kontinuierliche Beheizung des Innenraumes in jeder Betriebssituation aufrechtzuerhalten. Durch die Abschaltung des automatischen Start/Stop-Modus wird bei einem kurzfristigen verkehrsbedingten Anhalten des Fahrzeuges, beispielsweise beim Ampelstop, verhindert, daß ein Einbruch einer Ausblastemperatur bei vorliegender Heizleistungsanforderung erfolgt. Insbesondere ist bevorzugt, wenn das Abschalten des automatischen Start/Stop-Modus der Brennkraftmaschine ab einer vorgebbaren Mindest-Heizleistungsanforderung, vorzugsweise ab 30 % bis 95 % einer maximalen Heizleistungsanforderung, erfolgt. Je nach verwendeten Schalter kann der eingestellte Wert etwas toleranzbehaftet sein.

Hierdurch wird sichergestellt, daß bei geringer Heizleistungsanforderung, bei der in der Regel nur eine relativ geringe Ausblastemperatur notwendig ist, ein kurzfristiges Abschalten der Brennkraftmaschine während eines Ampelstops oder dergleichen, nicht zu einem nennenswerten, durch Fahrzeuginsassen spürbaren Abfall der Ausblastemperatur führt. Erst bei größeren Heizleistungsanforderungen, bei denen Schwankungen, insbesondere ein Abfallen der Ausblastemperatur, zu spürbaren Komforteinbußen für die Fahrzeuginsassen führt, wird der automatische Start/Stop-Betrieb der Brennkraftmaschine unterbrochen. Außerdem kann die Heizung mit einem elektrischen Zusatzheizelement, z. B. ein PTC, gekoppelt sein. Ein solches Heizelement kann für eine bestimmte Zeit (insb. < 1 min) bei abgeschalteten Motor eine gewisse Wärmeversorgung (ggf. gedrosselt) sicherstellen; vorteilhaft wird ein solches Heizelement (ggf. nach der vorgegebenen Zeitspanne) ebenfalls mit dem Motor abgeschaltet, ein erfindungsgemäß erfolgender Motordurchlauf wird entsprechend gleichzeitig zur Erzeugung der notwendigen elektrischen Energie für das elektrische Zuheizsystem genutzt. Das elektrische Zuheizsystem wird vorteilhaft bei einer niedrigen Mindest-Heizleistungsabforderung (insb. < 50 %) zugeschaltet und insbesondere in Abhängigkeit der Kühlwassertemperatur (keine Zuschaltung bei hoher Kühlwassertemperatur).

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnung, die ein Blockschaltbild einer Heizungsanlage für den Innenraum eines Fahrzeuges zeigt, näher erläutert.

Die Figur zeigt ein Blockschaltbild einer insgesamt mit 10 bezeichneten Heizungsanlage eines Fahrzeuges. Die Heizungsanlage 10 umfaßt ein Heizgerät 12, durch das ein Kanalsystem 14 zum Transport von Luft führt. Das Kanalsystem 14 besitzt an seinem stromabwärtigen Ende 16 wenigstens einen - nicht dargestellten - Lufteinlaß zum Zuführen von Frischluft 18 und an seinem stromaufwärtigen Ende 20 wenigstens einen Luftauslaß, der in einen Innenraum eines Fahrzeuges mündet. Das Kanalsystem 14 ist verzweigt ausgeführt und mündet üblicherweise in einer Vielzahl von Luftauslässen, beispielsweise in einer Instrumententafel, im Fußraum, im Türbereich oder dergleichen des Fahrzeuges. Die Frischluft 18 wird entweder als Außenluft, von außerhalb des Fahrzeuges, oder als Innenluft, aus einem Innenraum des Fahrzeuges (Umluftbetrieb), angesaugt. Zum Aufrechterhalten einer Luftströmung ist in das Kanalsystem 14 eine hier nicht dargestellte Strömungsmaschine integriert. Zum wahlweisen Aufheizen der Frischluft 18 wird diese durch das Heizgerät 12 geführt, so daß eine hier lediglich schematisch angedeutete Heizluft 22 dem Innenraum des Fahrzeuges zuführbar ist.

Das Fahrzeug besitzt eine Brennkraftmaschine 24, die flüssigkeitsgekühlt ist. Hierzu ist ein Kühlkreislauf 26 vorgesehen, in den die Brennkraftmaschine 24, ein Kühler 28 sowie eine mechanisch antreibbare Fördereinrichtung 30 integriert sind. Femer ist ein Ausgleichsbehälter 32 vorgesehen, der eine temperaturbedingte Volumenänderung eines, durch den Kühlkreislauf 26 strömenden Kühlmittels, beispielsweise Wasser, ausgleicht.

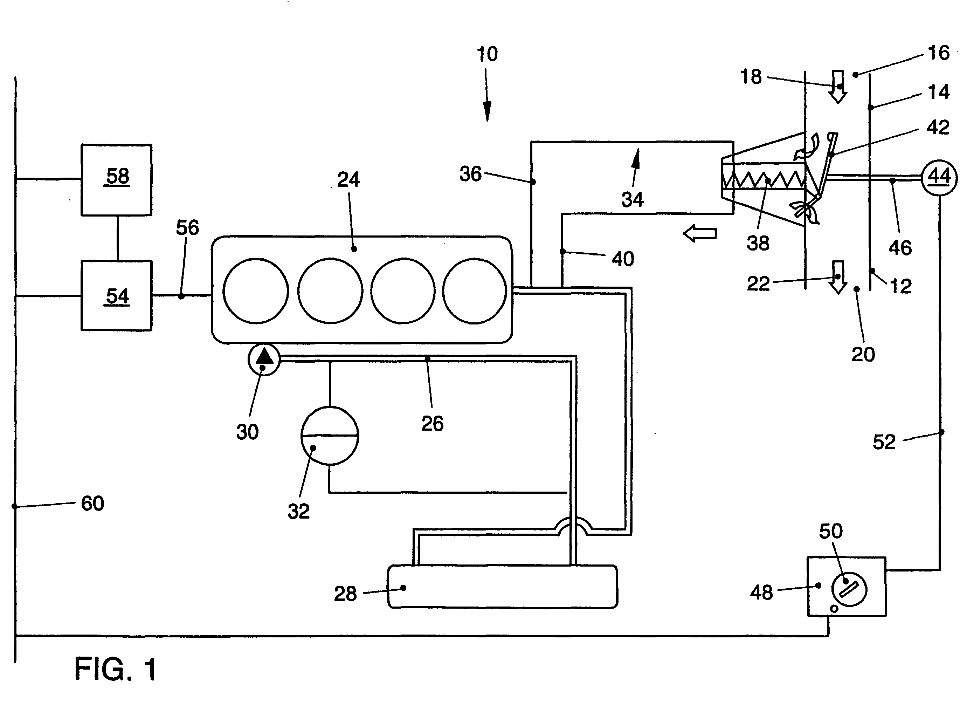

Der Kühlkreislauf 26 ist mit einem Heizkreislauf 34 gekoppelt. Hierbei führt ein Vorlauf 36 zu einem Wärmetauscher 38, von dem ein Rücklauf 40 zum Kühlkreislauf 26 führt. Durch die Kopplung des Heizkreislaufes 34 mit dem Kühlkreislauf 26 zirkuliert durch diesen ebenfalls das Kühlmittel mit einer entsprechenden Kühlmitteltemperatur. In der Figur 1 ist der Heizkreislauf 34 zu dem Kühlkreislauf 26 parallel geschaltet. Nach weiteren, nicht dargestellten Ausführungsbeispielen können der Heizkreislauf 34 und der Kühlkreislauf 26 auch in Reihe geschaltet sein.

Der Wärmetauscher 38 ist über eine Temperaturmischklappe 42 mit dem Kanalsystem 14 verbindbar. Die Temperaturmischklappe 42 ist über einen Stellantrieb 44, der beispielsweise von einem Schrittmotor gebildet ist, betätigbar. Über eine hier angedeutete mechanische Verbindung 46 ist der Stellantrieb 44 mit der Temperaturmischklappe 42 gekoppelt.

Der Heizungsanlage 10 ist ein Heizungssteuergerät 48 zugeordnet, das ein Stellmittel 50 umfaßt, dessen Stellung der Heizleistungsanforderung für den Innenraum des Fahrzeuges entspricht. Das Heizungssteuergerät 48 ist über eine Steuerleitung 52 mit dem Stellantrieb 44 verbunden.

Das Fahrzeug umfaßt femer ein Motorsteuergerät 54, das über eine hier angedeutete Steuerleitung 56 mit der Brennkraftmaschine 24 verbunden ist. Darüber hinaus ist ein Getriebesteuergerät 58 vorgesehen, daß der Ansteuerung eines nicht dargestellten Automatik-Getriebes des Fahrzeuges dient. Sämtliche Steuergeräte des Fahrzeuges, von denen in Figur 1 das Heizungssteuergerät 48, das Motorsteuergerät 54 und das Getriebesteuergerät 58 dargestellt sind, sind mit einem Fahrzeugbus 60 verbunden. Der Fahrzeugbus 60 ist beispielsweise ein CAN-Bus. Aufbau und Funktion eines derartigen Fahrzeugbusses sind allgemein bekannt und sollen im Rahmen der vorliegenden Beschreibung nicht näher erläutert werden. Der Fahrzeugbus 60 dient dem Austausch von Befehlen und/oder Informationen zwischen passiven und aktiven Komponenten innerhalb des Fahrzeuges.

Die in der Figur dargestellte Heizungsanlage 10 zeigt folgende Funktion:

Beim Betrieb der Brennkraftmaschine 24 erfolgt über die Fördereinrichtung 30 eine Umwälzung des Kühlmittels innerhalb des Kühlkreislaufes 26 und - durch die Parallelschaltung oder Reihenschaltung - im Heizkreislauf 34. Das Kühlmittel besitzt hierbei eine, gegebenenfalls über eine nicht dargestellte Steuereinrichtung einstellbare Soll-Kühlmitteltemperatur. Durch den Wärmetauscher 38 kann dem Kühlmittel eine Wärmemenge entzogen werden und diese der Frischluft 18 zugeführt werden. Diese Wärmemenge wird durch eine Öffnungsstellung der Temperaturmischklappe 42 beeinflußt. Entsprechend der Stellung der Temperaturmischklappe 42 wird eine mehr oder weniger große Menge der Frischluft 18 über den Wärmetauscher 38 geführt, so daß eine Ausblastemperatur T_{A} der Heizluft 22 in den Innenraum des Fahrzeuges einstellbar ist. Der Öffnungsgrad der Temperaturmischklappe 42 ist abhängig von einer Heizleistungsanforderung für den Innenraum des Fahrzeuges. Die Heizleistungsanforderung kann durch eine automatische Temperaturregelung für den Innenraum des Fahrzeuges und/oder einen Fahrzeugführer ausgelöst werden. Entsprechend dieser Heizleistungsanforderung wird die Temperaturmischklappe 42 über den Stellantrieb 44 geöffnet beziehungsweise geschlossen, so daß ein freier Strömungsquerschnitt des Kanalsystems 14 derart variiert wird, daß der Anteil der über den Wärmetauscher 38 geführten Frischluft 18 mit höherer Heizleistungsanforderung ansteigt beziehungsweise mit sinkender Heizleistungsanforderung abnimmt. Die Ansteuerung des Stellantriebes 44 erfolgt entsprechend der Stellung des Stellmittels 50 des Heizungssteuergerätes 48.

Die Heizleistungsanforderung, die zwischen 0 und 100 % liegen kann, wird vom Heizungssteuergerät 48 gleichzeitig als Information in den Fahrzeugbus 60 eingespeist und ist somit von weiteren, am Fahrzeugbus 60 gekoppelten Komponenten des Fahrzeuges abrufbar.

Die Brennkraftmaschine 24 ist in einem Start/Stop-Modus betreibbar, das heißt, bei einem verkehrsbedingten Halt, beispielsweise einem Ampelstop, wird über das Getriebesteuergerät 58 dem Motorsteuergerät 54 mitgeteilt, daß eine Abschaltung der Brennkraftmaschine 24 erfolgen soll. Über das Motorsteuergerät 54 wird beispielsweise die Zündung, Einspritzung oder dergleichen für die Brennkraftmaschine 24 gesteuert. Im Rahmen der vorliegenden Beschreibung soll auf die Wirkungsweise des Start/Stop-Modus der Brennkraftmaschine 24 nicht näher eingegangen werden.

Über das Getriebesteuergerät 58 und/oder das Motorsteuergerät 54, die ebenfalls an dem Fahrzeugbus 60 angeschlossen sind, wird das von dem Heizungssteuergerät 48 in den Fahrzeugbus 60 eingespeiste Informationssignal über die bestehende Heizleistungsanforderung ständig abgerufen. Übersteigt diese Heizleistungsanforderung einen vorgebbaren Wert, der beispielsweise bei 30 % liegt, wird durch das Getriebesteuergerät 58 und/oder das Motorsteuergerät 54 die automatische Start/Stop-Betriebsweise der Brennkraftmaschine 24 ausgeschaltet, so daß diese auch bei einem verkehrsbedingten Halt, beispielsweise einem Ampelstop, nicht abschaltet. Hierdurch wird erreicht, daß durch den Betrieb der Brennkraftmaschine 24 das Kühlmittel im Kühlkreislauf 26 und somit im Heizkreislauf 34 auf der Soll-Kühlmitteltemperatur gehalten wird. Somit ist sichergestellt, daß für den Wärmetauscher 38 eine genügend große Wärmeenergie zur Verfügung steht, die ein der gewünschten Heizleistungsanforderung entsprechendes Aufheizen der Heizluft 22 sicherstellt.

Nach weiteren Ausführungsbeispielen kann das Getriebesteuergerät 58 beziehungsweise das Motorsteuergerät 54 die Information über den Grad der Heizleistungsanforderung direkt vom Heizungssteuergerät 48 bekommen. Dies kann in Fahrzeugen der Fall sein, die entweder keinen Fahrzeugbus 60 besitzen, oder die Heizleistungsanforderung für keine weitere an dem Fahrzeugbus 60 angeschlossene Komponente von Interesse ist.

Femer kann nach einem weiteren Ausführungsbeispiel vorgesehen sein, daß der Grad der Heizleistungsanforderung dem Getriebesteuergerät 58 beziehungsweise dem Motorsteuergerät 54 über die Temperaturmischklappe 42 mitgeteilt wird. Ein Öffnungsgrad der Temperaturmischklappe 42 ist über eine Kurvenfunktion direkt an die Heizleistungsanforderung für den Innenraum des Fahrzeuges gekoppelt. Durch die Ansteuerung über den als Stellmotor ausgebildeten Stellantrieb 44 ist jeder Öffnungsstellung der Temperaturmischklappe 42 eine exakte Heizleistungsanforderung zuordbar. Somit kann das Ansteuersignal für den Stellantrieb 44 gleichzeitig als Informationssignal für das Getriebesteuergerät 58 beziehungsweise das Motorsteuergerät 54 verwendet werden, wenn eine vorgebbare Heizleistungsanforderung, beispielsweise von über 30 %, gegeben ist.

## Patentansprüche

1. Heizungsanlage für den Innenraum eines Fahrzeuges, das über eine flüssigkeitsgekühlte, in einem automatischen Start/Stop-Modus betreibbare Brennkraftmaschine antreibbar ist, wobei ein Kühlkreislauf (26) für die Brennkraftmaschine eine durch die Brennkraftmaschine mechanisch antreibbare Fördereinrichtung für ein Kühlmittel aufweist, der Kühlkreislauf mit einem Heizkreislauf (34) verbunden ist, im Heizkreislauf ein Heizgerät angeordnet ist, das in Abhängigkeit einer Heizleistungsanforderung eine Wärmeenergie an einen Luftvolumenstrom abgibt, und der Luftvolumenstrom über ein Kanalsystem (14) an wenigstens einen Auslaß in den Innenraum des Fahrzeuges geleitet wird, **dadurch gekennzeichnet, daß** der automatische Start/Stop-Modus der Brennkraftmaschine (24) in Abhängigkeit der Heizleistungsanforderung abschaltbar ist.

2. Heizungsanlage nach Anspruch 1, **dadurch gekennzeichnet, daß** das Abschalten des automatischen Start/Stop-Modus der Brennkraftmaschine (24) ab einer vorgebbaren Mindest-Heizleistungsanforderung erfolgt.

3. Heizungsanlage nach Anspruch 2, **dadurch gekennzeichnet, daß** die Mindest-Heizleistungsanforderung 30 % beträgt.

4. Heizungsanlage nach Anspruch 2, **dadurch gekennzeichnet, daß** die Mindest-Heizleistungsanforderung im Bereich 30 % - 95 % vorgegeben ist.

5. Heizungsanlage nach einem der vorhergehenden Ansprüche, **dadurch gekennzeichnet, daß** die Heizleistungsanforderung einem Getriebesteuergerät (58) und/oder einem Motorsteuergerät (54) zur Abschaltung des Start/Stop-Modus der Brennkraftmaschine (24) mitteilbar ist.

6. Heizungsanlage nach Anspruch 5, **dadurch gekennzeichnet, daß** die Heizleistungsanforderung durch ein Heizungssteuergerät (48) mitgeteilt wird.

7. Heizungsanlage nach Anspruch 5, **dadurch gekennzeichnet, daß** die Heizleistungsanforderung durch die Öffnungsstellung einer Temperaturmischklappe (42) des Heizgerätes (12) mitgeteilt wird.

8. Heizungsanlage nach einem der vorhergehenden Ansprüche, **dadurch gekennzeichnet, daß** die Heizleistungsanforderung als Information in einen Fahrzeugbus (60) eingespeist wird und über den Fahrzeugbus (60) vom Getriebesteuergerät (58) und/oder Motorsteuergerät (54) ausgewertet wird.

## Claims

1. Heating installation for the interior of a vehicle which can be driven via a liquid-cooled internal combustion engine capable of being operated in an automatic start/stop mode, a cooling circuit (26) for the internal combustion engine having for a coolant a conveying device capable of being driven mechanically by the internal combustion engine, the cooling circuit being connected to a heating circuit (34), the heating circuit having arranged in it a heating appliance which discharges heat energy to an air volume flow as a function of a heating power requirement, and the air volume flow being conducted via a duct system (14) to at least one outlet into the interior of the vehicle, **characterized in that** the automatic start/stop mode of the internal combustion engine (24) can be switched off as a function of the heating power requirement.

2. Heating installation according to Claim 1, **characterized in that** the switch-off of the automatic start/stop mode of the internal combustion engine (24) takes place as from a predeterminable minimum heating power requirement.

3. Heating installation according to Claim 2, **characterized in that** the minimum heating power requirement amounts to 30%.

4. Heating installation according to Claim 2, **characterized in that** the minimum heating power requirement is predetermined in the range of 30%-95%.

5. Heating installation according to one of the preceding claims, **characterized in that** the heating power requirement can be communicated to a transmission control unit (58) and/or engine control unit (54) in order to switch off the start/stop mode of the internal combustion engine (24).

6. Heating installation according to Claim 5, **characterized in that** the heating power requirement is communicated by means of a heating control unit (48).

7. Heating installation according to Claim 5, **characterized in that** the heating power requirement is communicated by means of the opening position of a temperature mixing flap (42) of the heating appliance (12).

8. Heating installation according to one of the preceding claims, **characterized in that** the heating power requirement is fed as information into a vehicle bus (60) and is evaluated via the vehicle bus (60) by the transmission control unit (58) and/or engine control unit (54).

## Revendications

1. Dispositif de chauffage pour l'intérieur d'un véhicule, qui peut être entraîné par le biais d'un moteur à combustion interne à refroidissement liquide, pouvant fonctionner dans un mode automatique de marche/arrêt, un circuit de refroidissement (26) pour le moteur à combustion interne présentant un dispositif de transport d'un réfrigérant pouvant être entraîné mécaniquement par le moteur à combustion interne, le circuit de refroidissement étant connecté à un circuit de chauffage (34), un dispositif de chauffage étant disposé dans le circuit de chauffage, lequel délivre en fonction d'une demande de puissance de chauffage une énergie thermique au débit volumique d'air, et le débit volumique d'air étant conduit par le biais d'un système de conduites (14) à au moins une sortie dans l'intérieur du véhicule, **caractérisé en ce que** le mode automatique de marche/arrêt du moteur à combustion interne (24) peut être déconnecté en fonction de la demande de puissance de chauffage.

2. Dispositif de chauffage selon la revendication 1, **caractérisé en ce que** la déconnexion du mode automatique de marche/arrêt du moteur à combustion interne (24) s'effectue à partir d'une demande de puissance de chauffage minimale prédéfinissable.

3. Dispositif de chauffage selon la revendication 2, **caractérisé en ce que** la demande de puissance de chauffage minimale est de 30%.

4. Dispositif de chauffage selon la revendication 2, **caractérisé en ce que** la demande de puissance de chauffage minimale est comprise dans la plage de 30% à 95%.

5. Dispositif de chauffage selon l'une quelconque des revendications précédentes, **caractérisé en ce que** la demande de puissance de chauffage peut être communiquée à un appareil de commande de boîte de vitesses (58) et/ou à un appareil de commande du moteur (54) pour déconnecter le mode de marche/arrêt du moteur à combustion interne (24).

6. Dispositif de chauffage selon la revendication 5, **caractérisé en ce que** la demande de puissance de chauffage est communiquée par le biais d'un appareil de commande de chauffage (48).

7. Dispositif de chauffage selon la revendication 5, **caractérisé en ce que** la demande de puissance de chauffage est communiquée par la position d'ouverture d'un clapet de mélange de température (42) de l'appareil de chauffage (12).

8. Dispositif de chauffage selon l'une quelconque des revendications précédentes, **caractérisé en ce que** la demande de puissance de chauffage est entrée sous forme d'information dans un bus (60) du véhicule et est analysée par le biais du bus (60) du véhicule par l'appareil de commande de boîte de vitesses (58) et/ou par l'appareil de commande du moteur (54).
